# EUROPEAN PATENT APPLICATION

(11) **EP 2 375 734 A2**
(43) Date of publication of application: **12.10.2011**
(21) Application number: 11158398.5
(22) Date of filing: 16.03.2011
(51) Int. Cl.: H04N 5/445

(54) **Display device and method of driving the same**

(30) Priority: 12.04.2010 KR 20100033476
(71) Applicant: Samsung Electronics Co., Ltd., Suwon-si, Gyeonggi-do 442-742 (KR)
(72) Inventor: KIM, Mun-seok, Gyeonggi-do (KR)
(74) Representative: Robinson, Ian Michael

(57) **Abstract**

A display device including a broadcast receiving unit receiving a broadcast signal; an image processing unit processing the broadcast signal received by the broadcast receiving unit to be displayed; a display unit displaying an image based on the broadcast signal processed by the image processing unit; a connection unit connecting to an external device which stores at least one content; and a controller exploring whether the external device connected to the connection unit includes an information file of the content, analyzing the information file to determine whether the content is effective, and allowing, in response to analyzing that the content is effective, displaying information about the effective content on the display unit.

## Description

### BACKGROUND

### 1. Field

Apparatuses and methods consistent with the exemplary embodiments relate to a display device and a method of driving the same, and more particularly, to a display device which is capable of executing content and a method of driving the same.

### 2. Description of the Related Art

In recent digital TV environments, not only audio and video information but data information is also transmitted. Several broadcasting standards have been established for broadcasts carrying data information, and there is wide use of broadcast receiving equipment, such as a TV and set-top box, which allows viewing these data broadcasts. Accordingly, using the data information, broadcasting stations can transmit additional details of a channel or program, or content such as weather, medical information, information about performances, games and books, etc. Such content, represented by the data information, is produced in a broadcasting data service standard application programming interface (API). However, even if this broadcasting data service standard API is released so that anyone may use it, content executed by a TV is limited to content based on data information included in a broadcast signal and transmitted by a broadcasting station. A problem introduced in this system is that it is not easy for consumers to use extensive content. Further, many developers have difficulties in participating in development of content since the content they develop must be included in the broadcast signal to be executed.

### SUMMARY

According to the present invention there is provided an apparatus and method as set forth in the appended claims. Other features of the invention will be apparent from the dependent claims, and the description which follows.

One or more exemplary embodiments provide a display device which provides content independently of broadcast signals to enable use of extensive content and a method of driving the same.

The foregoing and/or other aspects of the exemplary embodiments may be achieved by providing a display device including a broadcast which receives unit receiving a broadcast signal; an image processing unit which processes the broadcast signal received by the broadcast receiving unit to be displayed; a display unit which displays an image based on the broadcast signal processed by the image processing unit; a connection unit which connects to an external device which stores at least one content; and a controller which explores whether the external device connected to the connection unit includes an information file of the at least one content, which analyzes the information file to determine whether the at least one content is effective, and which allows, in response to analyzing that the at least one content is effective, information about the at least one effective content to be displayed on the display unit.

The display device may further include a user input unit which receives input by a user, wherein the controller allows execution of the at least one effective content when the user selects the information about the at least one effective content displayed on the display unit.

The broadcast receiving unit may receive other content and an information file of the other content, and the controller analyzes the information file of the other content received by the broadcast receiving unit to determine whether the other content is effective and if the other content is determined to be effective, the controller allows information about the effective content to be displayed on the display unit.

The information file of the at least one content may includes a content name, properties, a position where the at least one content is stored, and identification.

The controller may determine that the at least one content is effective if a route of the at least one content in the information file is the same as a route of the at least one content stored in the external device.

The at least one content may be produced in a broadcasting data service standard API.

The broadcasting data service standard API may be a JAVA API.

The connection unit may connect to a universal serial bus (USB) .

Another aspect of the exemplary embodiments is achieved by providing a method of driving a display device, the method including receiving and processing a broadcasting signal to be displayed and displaying an image based on the processed broadcast signal; exploring whether an external device, connected to the display device and storing at least one content, includes an information file of the at least one content; determining whether the at least one content is effective by analyzing the information file; and displaying, in response to determining that the at least one content is effective, information about the at least one effective content.

The method may further include receiving input by a user; and executing the at least one effective content if the user selects the displayed information about the at least one effective content.

The displaying the image may include receiving other content and an information file of the other content, and the determining comprises determining whether the other content is effective by analyzing the received information file of the other content.

The determining may include determining that the at least one content is effective if a route of the at least one content in the information file is the same as a route of the at least one content stored in the external device.

The information file of the at least one content may include a content name, properties, a position where the at least one content is stored, and identification.

The at least one content may be produced in a broadcasting data service standard API.

The broadcasting data service standard API may be a JAVA API.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 illustrates a configuration of a display device according to one exemplary embodiment.

FIG. 2 illustrates an information file of content executed in the display device according to the exemplary embodiment.

FIG. 3 illustrates displaying information about content effective in the display device according to the exemplary embodiment.

FIG. 4 is a flow chart illustrating an operation of the display device according to the exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

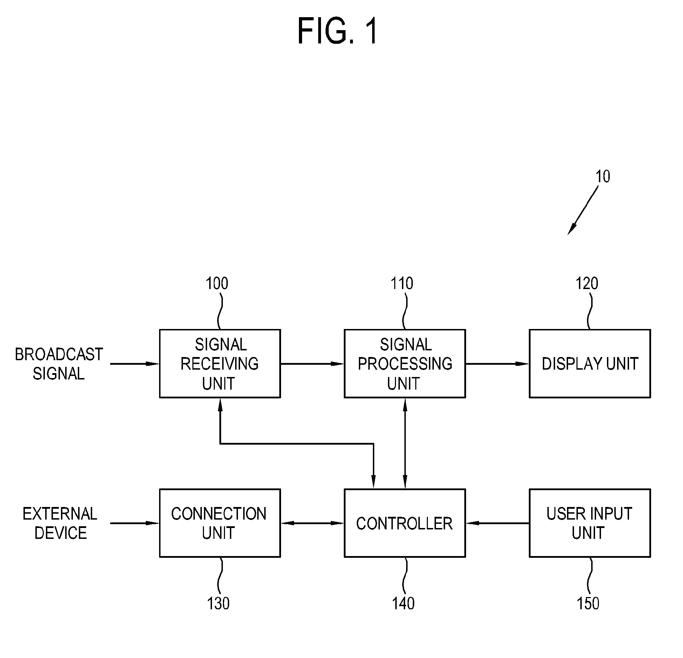

FIG. 1 illustrates a configuration of a display device 10 according to one exemplary embodiment.

Referring to FIG. 1, the display device 10 according to the present exemplary embodiment includes a signal receiving unit 100, a signal processing unit 110, a display unit 120, a connection unit 130, a controller 140, and a user input unit 150.

The signal receiving unit 100 may receive audio signals for audio output, image signals for image output, data signals for data output, etc. In this case, the signal receiving unit 100 may receive a broadcast signal of a channel selected by a user via tuning according to control by the controller 140. Moreover, the signal receiving unit 100 may receive image signals output from a video device such as a Digital Video Disc (DVD), Blu-ray Disc (BD), etc. In addition, the signal receiving unit 100 may receive a combination of image signal, an audio signal, and a data signal as a single broadcast signal.

The signal processing unit 110 processes a received image signal to be displayed on the display unit 120. Signal processing conducted by the signal processing unit 110 includes processing such as decoding, image enhancing, and scaling an image signal, etc. Furthermore, the signal processing unit 110 may perform demultiplexing which is sorting broadcast signals received through the signal receiving unit 100 into image, audio, and data signals, decoding audio and data signals, etc. In this case, the display device 10 may further include an audio output unit (not shown), e.g., a speaker, which outputs a sound based on an audio signal processed by the signal processing unit 110. Further, the signal processing unit 110 may generate content on the basis of a data which is included in a received data signal. The data signal, including information signaling a start of a signal, packet identification number, pure data, etc., is received in a data stream format, wherein only pure data are used to create content.

The display unit 120 displays an image on the basis of an image signal processed by the signal processing unit 110. The display unit 120 may use, for example, a liquid crystal display (LCD) to display an image. In this case, although not shown, the display unit 120 may include an LCD panel, a panel driver, a backlight, etc. The backlight may include a light source, e.g., light-emitting diodes (LEDs). The display unit 120 may display content if the content generated based on a data included in a data signal is executed. Here, the content may be displayed along with an image or by itself.

The connection unit 130 connects to an external device (not shown) which stores content. Here, the external device may be a portable storage device such as a universal serial bus (USB) flash drive. The stored content may include information about weather, stocks, real estate, news, various performances, etc., which may be produced in a broadcasting data service standard API. The display device 100 according to the present exemplary embodiment may execute content produced in a JAVA API.

Meanwhile, the external device stores not only content but a content information file which specifies information about the content. The information included in the content information file is specified by a content producer or the like and serves as data to determine whether the content corresponding to the content information file is executable by the display device 10 when the external device connects to the display device 10 according to the present embodiment.

The user input unit 150 receives a user's input to control the display device 10. The user input unit 150 may be a remote control receiver (not shown) if using a remote control (not shown), or may be included in the display unit 120 if using a touch screen (not shown). Further, if mounted as a button on part of the display device 10, the user input unit 150 may be the button.

The controller 140 controls the overall operations of the other components of the display device 10, such as the signal receiving unit 100, the signal processing unit 110, etc. Moreover, in response to an external device connecting to the connection unit 130, the controller 140 determines, using a content information file in the external device, whether content included in the external device is effective with respect to the display device 10, , which is explained in detail below.

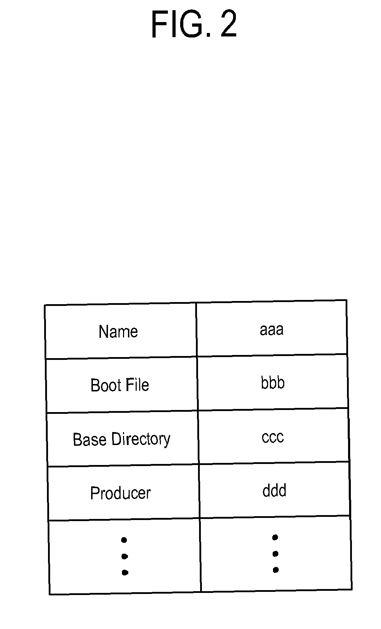

FIG. 2 illustrates an information file of content executed in the display device 10 according to the present exemplary embodiment.

The information file of the content includes a content name, properties, a position where the content is stored, identification (ID), etc. FIG. 2 shows a content name, a boot file, a base directory, a producer, etc. In response to an external device connecting to the connection unit 130, the controller 140 explores whether an information file of content exists in the external device. In the case that the external device has content but does not include an information file of the content, the content cannot be executed. If there is no information file, any specific operation may not be performed, but a message reporting no information file may be displayed on the display unit 120.

If there is an information file of the content, the controller 140 determines whether the content is effective, i.e., whether the content can be displayed in the display device 10 according to the present exemplary embodiment. In this process, it is not determined whether there is an error in the content. Thus, in the case that the content is effective but there is an error, the content may not be executed.

The determination that the content is effective is made by comparing specified data in the information file of the content and the content stored in the external device. For example, the controller 140 determines whether the content is present in a base directory mentioned in the information file, whether a boot file exists, etc. If the base directory and the boot file are specified as ccc and as bbb, respectively, in the information file, the controller 140 determines whether the content exists in the directory ccc and whether the bbb file exists in the external device. Here, various files such as an execution file, an image file, etc. are needed to execute content, and thus the controller 140 identifies whether there is a file to execute content or only whether there is an execution file in the base directory ccc.

Meanwhile, the display device according to the present embodiment may receive a data signal, and the signal processing unit 110 generates an application information table (AIT) including information about the number of content, property information of the content, content control codes, content names and positions, etc. The signal processing unit 110 generates the AIT on the basis of data included in the data signal and transmits it to the controller 140. The controller 140 may determine effectiveness of the content using the AIT. The information file of the content stored in the external device may include information similar to the information included in the AIT, as discussed above.

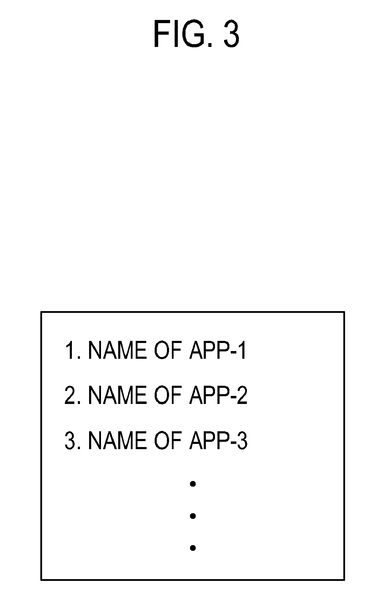

FIG. 3 illustrates displaying information about content effective in the display device 10 according to the exemplary embodiment.

Referring to FIG. 3, if determining that content stored in an external device is effective, the controller 140 allows displaying information about the content. The information about the content may be displayed with a content name or detail so that a user easily recognizes the content. In FIG. 3, a content name is displayed, and in the case of a plurality of content, all content names are displayed.

Meanwhile, in the case of receiving a data signal to generate content, information about the content, such as names of effective content, is displayed.

When names of effective content are displayed and a user selects a specific content name, the controller 140 allows the executed content to be displayed. For example, if the content selected by the user is news content, news may be displayed. In the case that the news content is executed, the user can watch news, while also viewing other images.

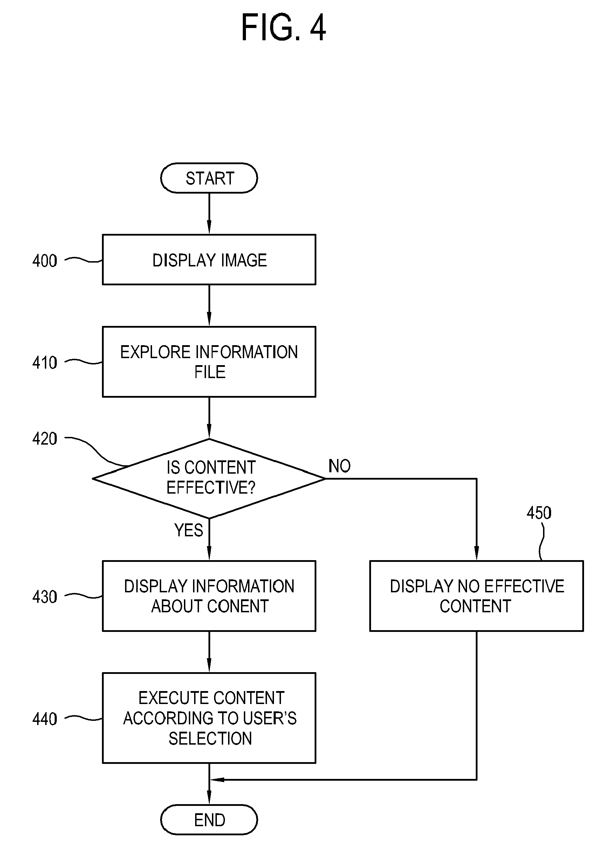

FIG. 4 is a flow chart illustrating an operation of the display device 10 according to the exemplary embodiment.

Referring to FIG. 4, when the display device 10 is turned on, the display device 10 displays an image using an image signal, an audio signal, etc. included in a broadcast signal (400). Then, in response to an external device being connected to the connection unit 130, the controller 140 explores whether the external device has an information file of content (410). If the information file exists, the controller 140 determines whether the content is effective (420). If the content is effective (YES at 420), the controller 140 allows displaying information about the content (430). Then, if a user selects specific content using the displayed information about the content, the controller 140 allows execution of the content (operation 440). However, if the content is not effective (NO at 420), a message reporting that the external device does not include any effective content is displayed (450).

As described above, according to the present exemplary embodiment, a consumer can be provided with content independently of broadcast signals to use extensive and rich high-quality content.

In addition, since the development of content is not limited to developers related to broadcasting stations in the exemplary embodiment, it induces participation of a variety of developers.

## Claims

1. A display device comprising:
a broadcast receiving unit which receives a broadcast signal;
an image processing unit which processes the broadcast signal received by the broadcast receiving unit to be displayed;
a display unit which displays an image based on the broadcast signal processed by the image processing unit;
a connection unit which connects to an external device which stores at least one content; and
a controller which explores whether the external device connected to the connection unit includes an information file of the at least one content, which analyzes the information file to determine whether the at least one content is effective, and which allows, in response to analyzing that the at least one content is effective, information about the at least one effective content to be displayed on the display unit.

2. The display device according to claim 1, further comprising:
a user input unit which receives input by a user, wherein the controller allows execution of the at least one effective content when the user selects the information about the at least one effective content displayed on the display unit.

3. The display device according to claim 1, wherein the broadcast receiving unit receives other content and an information file of the other content, and the controller analyzes the information file of the other content received by the broadcast receiving unit to determine whether the other content is effective and if the other content is determined to be effective, the controller allows information about the effective content to be displayed on the display unit.

4. The display device according to claim 1, wherein the information file of the at least one content comprises a content name, properties, a position where the at least one content is stored, and identification.

5. The display device according to claim 1, wherein the controller determines that the at least one content is effective if a route of the at least one content in the information file is the same as a route of the at least one content stored in the external device.

6. The display device according to claim 1, wherein the at least one content is produced in a broadcasting data service standard application programming interface (API).

7. The display device according to claim 6, wherein the broadcasting data service standard API is a JAVA API.

8. The display device according to any preceding claim, wherein the connection unit connects to a universal serial bus (USB) .

9. A method of driving a display device, the method comprising:
receiving and processing a broadcasting signal to be displayed and displaying an image based on the processed broadcast signal;
exploring whether an external device, connected to the display device and storing at least one content, includes an information file of the at least one content;
determining whether the at least one content is effective by analyzing the information file; and
displaying, in response to determining that the at least one content is effective, information about the at least one effective content.

10. The method according to claim 9, further comprising:
receiving input by a user; and
executing the at least one effective content if the user selects the displayed information about the at least one effective content.

11. The method according to claim 9, wherein the displaying the image comprises receiving other content and an information file of the other content, and the determining comprises determining whether the other content is effective by analyzing the received information file of the other content.

12. The method according to claim 9, wherein the determining comprises determining that the at least one content is effective if a route of the at least one content in the information file is the same as a route of the at least one content stored in the external device.

13. The method according to claim 9, wherein the information file of the at least one content comprises a content name, properties, a position where the at least one content is stored, and identification.

14. The method according to claim 9, wherein the at least one content is produced in a broadcasting data service standard application programming interface (API).

15. The method according to claim 14, wherein the broadcasting data service standard API is a JAVA API.
